# EUROPEAN PATENT APPLICATION

(11) **EP 3 614 246 A1**
(43) Date of publication of application: **26.02.2020**
(21) Application number: 18787774.1
(22) Date of filing: 05.04.2018
(51) Int. Cl.: G06F 3/0481, G06F 3/0482, H04Q 9/00

(54) **DISPLAY METHOD, PROGRAM AND DISPLAY SYSTEM**

(30) Priority: 21.04.2017 JP 2017084743
(71) Applicant: Panasonic Intellectual Property Management Co., Ltd., Osaka-shi, Osaka 540-6207 (JP)
(72) Inventor: AIZU Kazuhiro, Osaka-shi, Osaka 540-6207 (JP); JULAYHI Jasmeen, Osaka-shi, Osaka 540-6207 (JP); SATOU Minoru, Osaka-shi, Osaka 540-6207 (JP); MASUDA Rikiya, Osaka-shi, Osaka 540-6207 (JP); OHNO Masami, Osaka-shi, Osaka 540-6207 (JP); IMAI Tomikazu, Osaka-shi, Osaka 540-6207 (JP)
(74) Representative: Appelt, Christian W.
(86) International application number: PCT/JP2018/014509
(87) International publication number: WO 2018/193855

(57) **Abstract**

A display method includes, based on at least one of first information obtained by a control device including a display and second information obtained by a device other than the control device, displaying, on the display, a recommendation object for a user to instruct a recommended control having, as a control target, a first device that is other than the control device and controllable before the first information and the second information are obtained (S14).

## Description

### TECHNICAL FIELD

The present invention relates to a display method, a program, and a display system of an object for a user to instruct control of a device.

### BACKGROUND ART

Conventionally, technology for remotely operating a device is known. PTL 1 discloses technology for pairing an electronic device and a communication terminal apparatus by a physical operation.

### Citation List

### Patent Literature

PTL 1: Japanese Unexamined Patent Application Publication No. 2015-050752

### SUMMARY OF THE INVENTION

### TECHNICAL PROBLEM

Incidentally, in an information terminal operated by a user to control a device, improving the operability is an issue to be addressed.

The present invention provides a display method, a program, and a display system that can reduce the number of times of operation for a user to control a device.

### SOLUTIONS TO PROBLEMS

A display method according to an aspect of the present invention includes: based on at least one of first information obtained by an information terminal including a display and second information obtained by a device other than the information terminal, displaying, on the display, an object for a user to instruct a recommended control having, as a control target, a first device that is other than the information terminal and controllable before the first information and the second information are obtained.

A program according to an aspect of the present invention is a program for causing a computer to execute the above-described display method.

A display system according to an aspect of the present invention includes: an information terminal including a display; and a display controller that, based on at least one of first information obtained by the information terminal and second information obtained by a device other than the information terminal, displays, on the display, an object for a user to instruct a recommended control having, as a control target, a first device that is other than the information terminal and controllable before the first information and the second information are obtained.

### ADVANTAGEOUS EFFECT OF INVENTION

The present invention realizes a display method, a program, and a display system that can reduce the number of times of operation for a user to control a device.

### BRIEF DESCRIPTION OF DRAWINGS

FIG. 1 is a diagram showing the outline of a device control system according to Embodiment 1.
FIG. 2 is a perspective view of a control device according to Embodiment 1.
FIG. 3 is a front view of the control device according to Embodiment 1.
FIG. 4 is a diagram showing an example of an image for controlling an air-conditioner.
FIG. 5 is a diagram showing an example of an image for scene control.
FIG. 6 is a diagram showing another example of an image for scene control.
FIG. 7 is a block diagram showing a configuration of a device control system according to Embodiment 1.
FIG. 8 is a flowchart of Display Example 1 of a recommendation object of Embodiment 1.
FIG. 9 is a diagram showing an example of a superimposed display of images.
FIG. 10 is a diagram showing an example of an icon for performing a recommended control by one-touch.
FIG. 11 is a flowchart of Display Example 2 of a recommendation object of Embodiment 1.
FIG. 12 is a flowchart of Display Example 1 of a recommendation object of Embodiment 2.
FIG. 13 is a flowchart of Display Example 2 of a recommendation object of Embodiment 2.
FIG. 14 is a flowchart of Display Example 3 of a recommendation object of Embodiment 2.
FIG. 15 is a flowchart of Display Example 4 of a recommendation object of Embodiment 2.

### DESCRIPTION OF EXAMPLARY EMBODIMENTS

Hereinafter, embodiments will be described with reference to the drawings. It should be noted that each of the following embodiments shows a generic or specific example. The numerical values, shapes, materials, elements, the arrangement and connection of the elements, steps, the processing order of the steps, etc. shown in the following embodiments are mere examples, and thus are not intended to limit the present disclosure. Furthermore, among the elements described in the following embodiments, elements not recited in any one of the independent claims that indicate the broadest concepts are described as optional elements.

It should be noted that each of the figures is a schematic diagram and thus is not necessarily a precise illustration. Furthermore, in the figures, elements that are substantially the same are given the same numerical references, and overlapping description thereof may be omitted or simplified.

### (Embodiment 1)

### [Configuration of device control system]

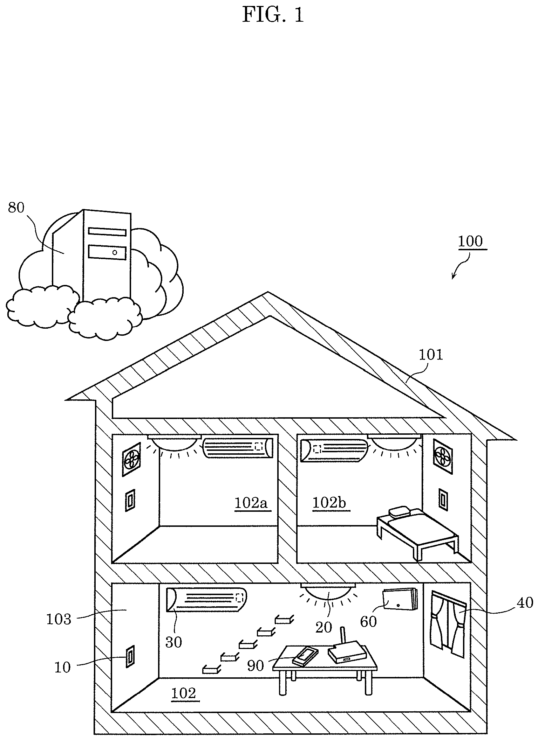

First, the configuration of a device control system according to Embodiment 1 will be described. FIG. 1 is a diagram showing the outline of the device control system according to Embodiment 1.

As shown in FIG. 1, device control system 100 is a system that is provided in facility 101, and that is for controlling a device disposed in facility 101. Facility 101 is, for example, a detached house. A plurality of rooms divided with walls, doors, etc. are included in facility 101. Specifically, the plurality of rooms are room 102, room 102a, and room 102b.

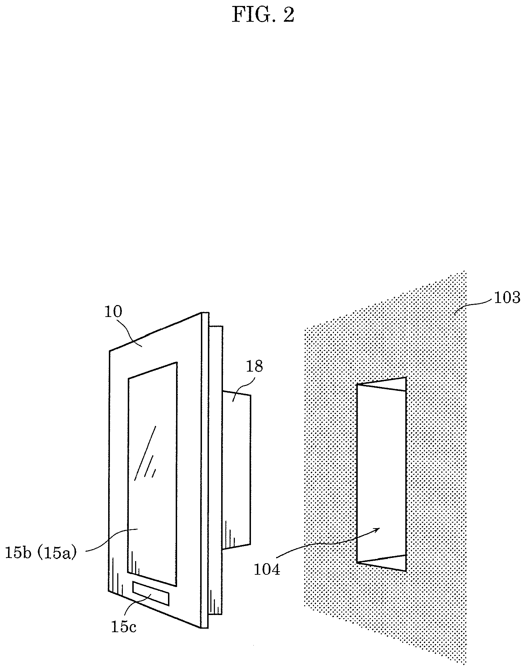

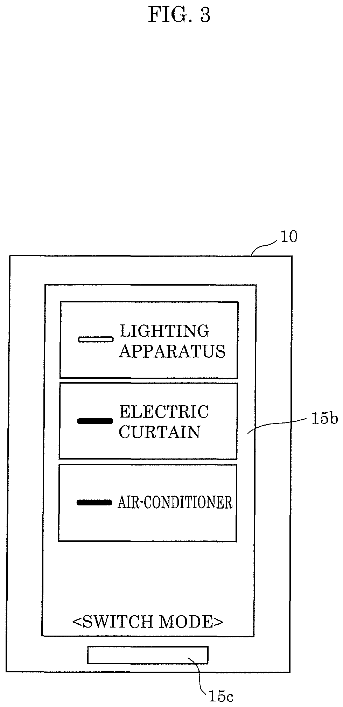

Control device 10 included in device control system 100 is a controller for a user to control lighting apparatus 20, air-conditioner 30, and electric curtain 40 that are disposed in room 102. Control device 10 also functions as a so-called wall switch (wall switch apparatus). FIG. 2 is a perspective view of control device 10. FIG. 3 is a front view of control device 10.

As shown in FIG. 2, control device 10 is disposed on wall 103 of room 102. Wall 103 is an example of structures included in facility 101. Control device 10 is disposed on wall 103 in a state where at least a part of housing 18 is housed in switch box 104 embedded in wall 103. A mounting method of control device 10 is broadly similar to that of a general-purpose wall switch, and a switch box for a wall switch can also be used for switch box 104.

As shown in FIG. 3, control device 10 functions as a so-called GUI (Graphical User Interface), and images including, for example, icons (buttons) are displayed on display 15b of control device 10. Hereinafter, the images shown in FIG. 3 are also described as images of switch modes. The user can turn on and off the electric power supply to each device, i.e., lighting apparatus 20, air-conditioner 30, and electric curtain 40 by performing a tap operation on the parts of the icons on display 15b (touch panel).

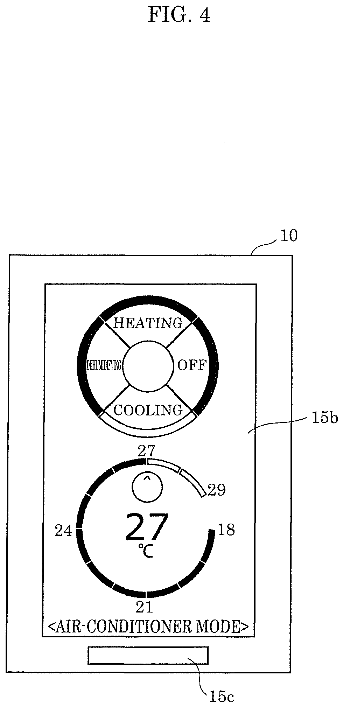

Further, an image for performing detailed control of each above-described device is also displayed on display 15b of control device 10. FIG. 4 is a diagram showing an example of the image for controlling air-conditioner 30. With the image shown in FIG. 4, it is possible for the user to perform changing of the operation mode and set temperature of air-conditioner 30. The changing of the operation mode and set temperature of air-conditioner 30 may be performed via respectively different images. Further, although not shown, an exclusive image for performing the dimming control and toning control, etc. of lighting apparatus 20, and an exclusive image for opening and closing electric curtain 40 may be displayed on display 15b.

Only one of such image for controlling air-conditioner 30, image for controlling lighting apparatus 20, and image for controlling electric curtain 40 is selectively displayed on display 15b, for example. For example, whenever the user performs a swipe operation on display 15b (touch panel), the image currently displayed is switched to another image.

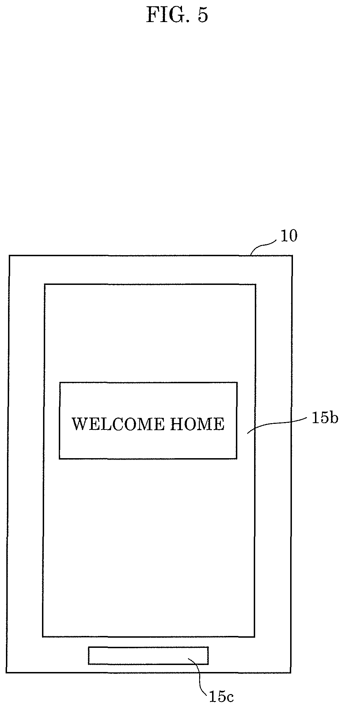

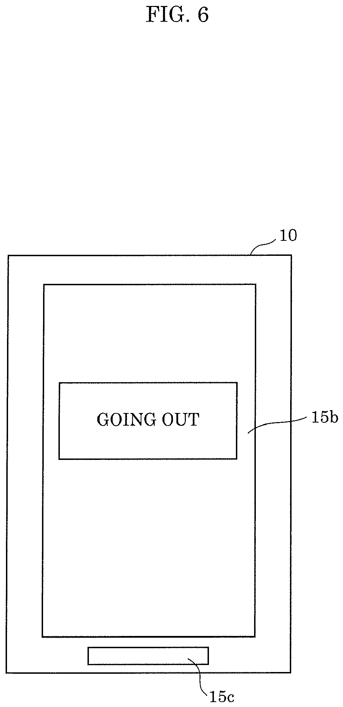

Additionally, an image for scene control is also displayed on display 15b of control device 10. FIG. 5 and FIG. 6 are diagrams showing examples of the image for scene control.

The scene control is control that operates at least a part of a plurality of devices disposed in facility 101, in order to bring the inside of facility 101 close to a predetermined indoor environment. In the scene control, for example, a plurality of devices with different functions are collectively controlled. For example, as shown in FIG. 5, an image including an icon including the characters of "welcome home" (hereinafter also described as a welcome home icon) is an image for the scene control performed mainly when the user comes home. When a tap operation is performed on the welcome home icon, lighting apparatus 20 is turned on, electric curtain 40 is opened, and air-conditioner 30 is turned on by transmitting a control signal by control device 10. That is, the control suitable for when the user comes home is performed by one-touch.

Additionally, as shown in FIG. 6, an image including an icon including the characters of "going out" (hereinafter also described as an going out icon) is an image for the scene control performed mainly when the user goes out. When a tap operation is performed on the going out icon, lighting apparatus 20 is turned off, electric curtain 40 is closed, and air-conditioner 30 is turned off by transmitting a control signal by control device 10. That is, the control suitable for when the user goes out is performed by one-touch.

As the other scene control, there is scene control that is performed mainly when the user goes to sleep by performing a tap operation on an icon including the characters of "good night" (hereinafter also described as a good night icon). Additionally, there is also scene control that is performed mainly when the user gets up by performing a tap operation on an icon including the characters of "good morning". The scene control may be performed immediately after a tap operation is performed on the icon, or may be performed after a predetermined period has passed since a tap operation is performed on the icon.

Further, although the image including one icon for the scene control in display 15b is displayed in FIG. 5 and FIG. 6, an image including a plurality of icons for the scene control may be displayed on display 15b. The same applies to icons for device control.

One image selected from the image of the above-described switch mode, the images for controlling lighting apparatus 20, air-conditioner 30, and electric curtain 40, and the image for the scene control, etc. is displayed on display 15b of control device 10. For example, whenever the user performs a swipe operation to display 15b (touch panel 15a), the image currently displayed is switched to another image.

Further, such screen transition may be performed according to an operation other than a swipe operation. For example, an icon for screen transition may be included in an image, and a screen transition may be performed by a tap operation on the icon for screen transition. Additionally, control device 10 may include a hardware key (button) for screen transition, and screen transition may be performed by an operation to the hardware key. That is, screen transition may be performed based on operation to control device 10.

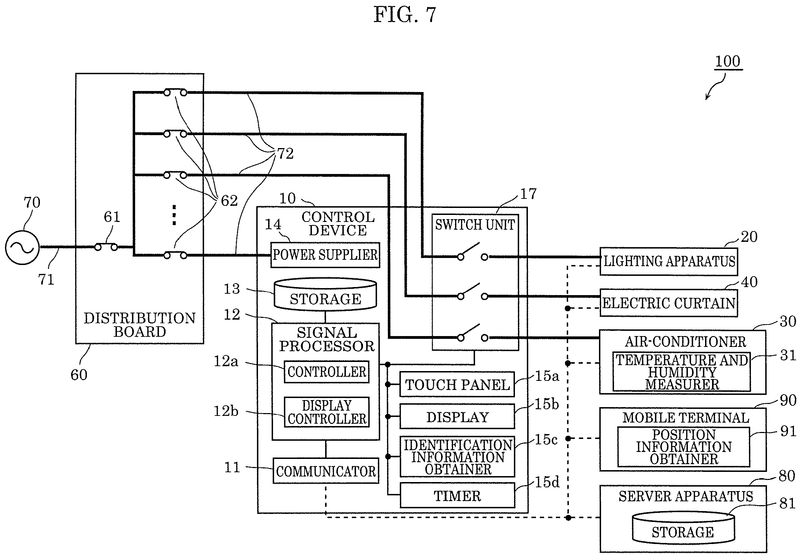

Hereinafter, the detailed configuration of device control system 100 will be described. FIG. 7 is a block diagram showing the configuration of a device control system according to Embodiment 1.

Device control system 100 is an example of a display system. As shown in FIG. 7, specifically, device control system 100 includes control device 10, lighting apparatus 20, air-conditioner 30, electric curtain 40, distribution board 60, server apparatus 80, and mobile terminal 90. Additionally, electric power system 70, which is an external power supply, is also shown in FIG. 7. Hereinafter, referring mainly to FIG. 1 and FIG. 7, each component constituting device control system 100 will be described.

### [Control Device]

As described above, control device 10 is a controller that is disposed in, for example, room 102, and that is for controlling the device disposed in room 102 by the user. Control device 10 is an example of an information terminal. Specifically, control device 10 controls lighting apparatus 20, air-conditioner 30, and electric curtain 40. In other words, lighting apparatus 20, air-conditioner 30, and electric curtain 40 are examples of a control target device (a first device or a second device) of control device 10.

Specifically, control device 10 includes communicator 11, signal processor 12, storage 13, power supplier 14, touch panel 15a, display 15b, identification information obtainer 15c, timer 15d, and switch unit 17. Additionally, as shown in FIG. 2, control device 10 includes housing 18.

Communicator 11 performs wireless communication with the device disposed in facility 101. Specifically, communicator 11 wirelessly transmits the control signal to lighting apparatus 20, air-conditioner 30, and electric curtain 40 based on control by signal processor 12 (controller 12a). Additionally, communicator 11 can also communicate with a device located outside facility 101, such as server apparatus 80 or mobile terminal 90 (shown in facility 101 in FIG. 1), via a wide area network such as the Internet. Communicator 11 receives, for example, a variety of information from server apparatus 80 or mobile terminal 90.

Specifically, communicator 11 is realized by a communication module (communication circuit). Communicator 11 is realized by, for example, a plurality of communication modules, such as a communication module for performing wireless communication with the device disposed in facility 101, and a communication module for performing communication with the device located outside facility 101 via a wide area network.

Signal processor 12 performs signal processing relevant to control of the device. Signal processor 12 includes controller 12a, and display controller 12b. Specifically, signal processor 12 is realized by a processor, a microcomputer, or a dedicated circuit. The specific operation of signal processor 12 will be described later.

Controller 12a performs control of lighting apparatus 20, air-conditioner 30, and electric curtain 40 by causing communicator 11 to wirelessly transmit the control signal. That is, the expressions "control" and "perform control" include outputting a control signal, etc. Additionally, controller 12a controls switch unit 17 based on the operation to display 15b (touch panel 15a). That is, controller 12a controls turning on and off of electric power supply to lighting apparatus 20, air-conditioner 30, and electric curtain 40.

Display controller 12b displays the above-described image for the scene control, etc. on display 15b. Specifically, display controller 12b displays the image on display 15b by generating a video signal, and outputting the generated video signal to display 15b.

Additionally, display controller 12b displays an object for a user to instruct the recommended control (hereinafter also described as a recommendation object) on display 15b. Specifically, the recommendation object is an image or an icon. An image is displayed on the entire display area of display 15b, and an icon is displayed on a part of display area of display 15b. The recommended control is the control that is predicted to be instructed by the user, and display controller 12b anticipates in advance a recommendation object for the user to instruct such control, and displays the recommendation object on display 15b. Note that the details of the display operation of such a recommendation object will be described later.

The information that is the origin of an image displayed on display 15b (information that is the origin of a video signal), a control program executed by signal processor 12, etc. are stored in storage 13. Specifically, storage 13 is realized by a semiconductor memory, etc.

Power supplier 14 includes a power receiver (for example, a terminal for power receiving) that receives AC power supplied from electric power system 70, and converts the power received by the power receiver into DC power suitable for the operation of control device 10, and supplies the DC power to each component included in control device 10. The AC power received by power supplier 14 is, for example, the AC power for an existing wall switch (power switch for the device disposed in facility 101). Specifically, power supplier 14 is a power supply circuit including an AC/DC converter, or a DC/DC converter.

Touch panel 15a is a detection device that detects an operation of the user to display 15b (touch panel 15a). Touch panel 15a may be a capacitive touch panel, or may be a touch panel of other systems, such as a resistive film system.

Display 15b is a touch-panel display on which touch panel 15a is disposed. Display 15b displays an image for the scene control, etc. based on control by display controller 12b. The images displayed by display 15b are illustrated in the above-described FIG. 3 to FIG. 6. Specifically, display 15b is realized by a liquid crystal panel or an organic EL panel, etc.

Identification information obtainer 15c obtains the identification information of the user who is operating control device 10. Specifically, identification information obtainer 15c is a fingerprint sensor, and obtains the user's fingerprint information as the user's identification information. Identification information obtainer 15c may be a biometric sensor that obtains the other biometric information, such as a sensor that detects a vein pattern. Additionally, identification information obtainer 15c may be an imaging apparatus that obtains the image of the user's face as the identification information. In this case, the user is identified by image processing including facial recognition processing.

Timer 15d is a timing apparatus that measures the present date and time (including the year, month, and day). Although timer 15d is specifically a real-time clock (RTC), etc., timer 15d may be any form.

Switch unit 17 turns on and off the electric power supply from electric power system 70 to each of lighting apparatus 20, air-conditioner 30, and electric curtain 40 based on the operation to display 15b (touch panel 15a). That is, switch unit 17 turns on and off the main power supply of lighting apparatus 20, air-conditioner 30, and electric curtain 40. Specifically, switch unit 17 is controlled by controller 12a based on the operation to display 15b (touch panel 15a). Switch unit 17 includes three switch elements corresponding to lighting apparatus 20, air-conditioner 30, and electric curtain 40 for direct control without performing wireless communication by controller 12a.

The switch elements are located on branch circuits 72 (on power lines) from electric power system 70 to each device, i.e., lighting apparatus 20, air-conditioner 30, and electric curtain 40, and turn on and off the electric connection between electric power system 70 and each device. In other words, the switch elements switch whether or not to supply power to the device disposed in facility 101. The switch elements may be elements that structurally open and close electric contacts, such as relay elements, or may be semiconductor switching elements, such as power transistors. Note that switch unit 17 may include at least one switch element. That is, switch unit 17 may be able to directly turn on and off the electric power supply to at least one device.

Housing 18 (shown in FIG. 2) houses communicator 11, signal processor 12 (controller 12a and display controller 12b), touch panel 15a, display 15b, identification information obtainer 15c, timer 15d, and switch unit 17. Although housing 18 is formed of, for example, a resin, a part or all of housing 18 may be formed of a metal. As described above, at least a part of housing 18 is embedded in wall 103 of facility 101. Housing 18 may be directly attached to the wall of facility 101, or may be indirectly attached to the wall of facility 101 via an attaching member, etc. Housing 18 may be able to be attached to a structure, such as wall 103 of facility 101.

In the above, the configuration of control device 10 has been described. Note that the described configuration of control device 10 is an example. For example, control device 10 may be a controller that does not include the components (switch unit 17, etc.) for functioning as a wall switch.

### [Lighting apparatus]

Lighting apparatus 20 is an example of the device disposed in facility 101, and is specifically disposed in room 102. Lighting apparatus 20 is a so-called ceiling light that lights the inside of a room. Specific forms of lighting apparatus 20 may be, but not particularly limited to, a downlight, a pendant light, a spotlight, or a bracket light, etc.

Specifically, lighting apparatus 20 includes an LED (Light Emitting Diode) as a light source. Lighting apparatus 20 may include a semiconductor light-emitting element such as a fluorescence tube, and a semiconductor laser, or a solid light-emitting element such as an organic EL (Electro Luminescence), and an inorganic EL, as a light source.

Additionally, although not shown, lighting apparatus 20 includes a communication module (communication circuit) for performing wireless communication with control device 10, and receives the control signal transmitted by communicator 11 included in control device 10. That is, lighting apparatus 20 can emit light or turn off the light based on the control signal received from control device 10. For example, when the rate of dimming (dimming ratio) is specified in the control signal, lighting apparatus 20 emits light at the specified rate of dimming. Additionally, when the color temperature is specified in the control signal, lighting apparatus 20 emits light with the specified color temperature. Further, the turning on and off (lighting and turning off the lights) of the electric power supply from electric power system 70 to lighting apparatus 20 are controlled by switch unit 17.

### [Air- conditioner]

Air-conditioner 30 is an example of the device disposed in facility 101, and is specifically disposed in room 102. Air-conditioner 30 is a home use air-conditioner. Air-conditioner 30 is an air-conditioner that can adjust the temperature of the wind sent out from air-conditioner 30 by including a heat exchanger (not shown), etc. That is, air-conditioner 30 includes a blowing function, and cooling and heating functions. Air-conditioner 30 is not limited to the home use air-conditioner, and may be an industrial air-conditioner.

Air-conditioner 30 includes temperature and humidity measurer 31. Temperature and humidity measurer 31 measures the temperature and humidity of room 102, and outputs the temperature information indicating the measured temperature (room temperature), and the humidity information indicating the measured humidity. Temperature and humidity measurer 31 includes a thermistor or a thermocouple as an element for measuring the temperature, and includes a polymer resistance humidity sensor, or a polymer capacitance humidity sensor as an element for measuring the humidity. Note that temperature and humidity measurer 31 separated from air-conditioner 30 may be used for measurement of the temperature and humidity in facility 101. Additionally, a temperature measurer separated from air-conditioner 30 and a humidity measurer separated from air-conditioner 30 may be used for measurement of the temperature and humidity in facility 101.

Additionally, although not shown, air-conditioner 30 includes a communication module (communication circuit) for performing wireless communication with control device 10, and receives the control signal transmitted by communicator 11 included in control device 10. That is, air-conditioner 30 can perform switching of operation mode, and changing of set temperature based on the control signal received from control device 10. Additionally, air-conditioner 30 transmits the temperature information and the humidity information that are output by temperature and humidity measurer 31 to communicator 11 included in control device 10. Turning on and off of the electric power supply from electric power system 70 to air-conditioner 30 are controlled by switch unit 17.

### [Electric curtain]

Electric curtain 40 is an example of the device disposed in facility 101, is disposed in room 102, and opens and closes a curtain. Although not shown, electric curtain 40 includes a communication module (communication circuit) for performing wireless communication with control device 10, and receives the control signal transmitted by communicator 11 included in control device 10. That is, electric curtain 40 opens and closes the curtain based on the control signal received from control device 10. Turning on and off of the electric power supply from electric power system 70 to electric curtain 40 are controlled by switch unit 17.

### [Distribution board]

Distribution board 60 includes main breaker 61 for turning on or off the electric power supply from electric power system 70 through main line 71. Main breaker 61 is a breaker that stops supply of the electric power from electric power system 70, when a current exceeding a predetermined current (a current based on the electric power defined by a contract with an electric power company) flows from electric power system 70.

Additionally, distribution board 60 includes a plurality of branch breakers 62 corresponding to a plurality of branch circuits 72 branched from main line 71, respectively. That is, distribution board 60 includes branch breaker 62 for each of branch circuits 72. Branch breaker 62 is a breaker that stops the supply of electric power to the branch circuit 72, when an overcurrent flows into branch circuit 72 connected to branch breaker 62.

Further, distribution board 60 may include a power consumption measuring function, and a wireless communication function that transmits a measured power consumption. The power consumption measuring function in this case may be a function that measures only the power consumption in main line 71, or may be a function that measures both the power consumption in main line 71, and the power consumption for each of branch circuits 72. Additionally, device control system 100 may include a power consumption measuring apparatus separated from distribution board 60. The separated power consumption measuring apparatus may measure only the power consumption in main line 71, or may measure both the power consumption in main line 71 and the power consumption for each of branch circuits 72.

### [Server apparatus]

Server apparatus 80 is an apparatus that obtains and manages information. Server apparatus 80 obtains, for example, weather forecast information, schedule information, traffic jam information, or delay information of public transportation facilities, and manages the obtained information. Server apparatus 80 includes storage 81 for managing (storing) such information. Storage 81 is realized by an HDD (Hard Disk Drive), or a semiconductor memory, etc.

Additionally, although not shown, server apparatus 80 includes a communication module (communication circuit) for communicating with control device 10, and transmits the information stored in storage 81 to communicator 11 included in control device 10.

Further, server apparatus 80 may be a server apparatus that constitutes a client/server system with control device 10.

### [Mobile terminal]

Mobile terminal 90 is an information communication terminal carried by the user, and, specifically, is a smart phone, a tablet terminal, or a wearable terminal. The wearable terminal includes a glasses type terminal, a bracelet type terminal, and a wristwatch type terminal, etc. Mobile terminal 90 includes position information obtainer 91 that obtains the position information indicating the current position of mobile terminal 90. Specifically, position information obtainer 91 is a GPS (Global Positioning System) module. In device control system 100, mobile terminal 90 is used to estimate the current position of the user.

Additionally, although not shown, mobile terminal 90 includes a communication module (communication circuit) for communicating with control device 10 and server apparatus 80, and transmits the position information obtained by position information obtainer 91 to communicator 11 included in control device 10.

### [Display Example 1 of recommendation object]

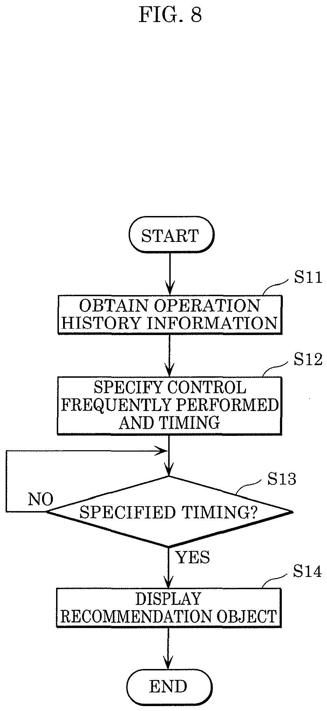

Next, Display Example 1 of a recommendation object performed by control device 10 will be described. FIG. 8 is a flowchart of Display Example 1 of a recommendation object.

First, display controller 12b obtains an operation by the user to display 15b (touch panel 15a) as operation history information (S11). Operation history information is an example of the first information obtained by control device 10, and is stored in storage 13. The operation history information includes the information about the timing of an operation including at least one or more of the time, the date, the day of the week, and the season. For example, when an operation by the user to display 15b (touch panel 15a) is performed, display controller 12b stores the time information measured by timer 15d in storage 13 as the information about the timing of the operation. Accordingly, the information about the timing of the operation can be included in the operation history information.

Next, display controller 12b specifies the control frequently performed, and the execution timing of the control, based on the operation history information (S12).

For example, display controller 12b analyzes the operation history information for three days stored in storage 13 for every hour, and specifies the control (control content) that is continuously performed for a predetermined number of days in the same time period. The predetermined number of days is, for example, three days. When display controller 12b specifies that, for example, the control of operating air-conditioner 30 in an automatic operation mode between 0:00 to 1:00 for three consecutive days, and lighting of lighting apparatus 20 in a night-light mode is performed, display controller 12b sets this control as the control frequently performed, and sets a time (for example, 0:30) belonging to 0:00 to 1:00 to be the execution timing of the control frequently performed.

Thereafter, display controller 12b determines whether or not the current time measured by timer 15d is the specified execution timing (S13). This determination is continued until the execution timing is reached (No in S13).

When the current time reaches the specified execution timing (Yes in S13), display controller 12b displays an object (an image or an icon) for the user to instruct the execution of the above-described control frequently performed on display 15b as the recommendation object (S14). That is, display controller 12b sets the above-described control frequently performed to the recommended control.

Here, the control frequently performed is the control that operates air-conditioner 30 in the automatic operation mode, and lights lighting apparatus 20 in the night-light mode. Accordingly, for example, the image for controlling air-conditioner 30 shown in the above-described FIG. 4, or the image for controlling lighting apparatus 20 is used as the recommendation object. The recommendation object in this case may be an image for controlling both air-conditioner 30 and lighting apparatus 20.

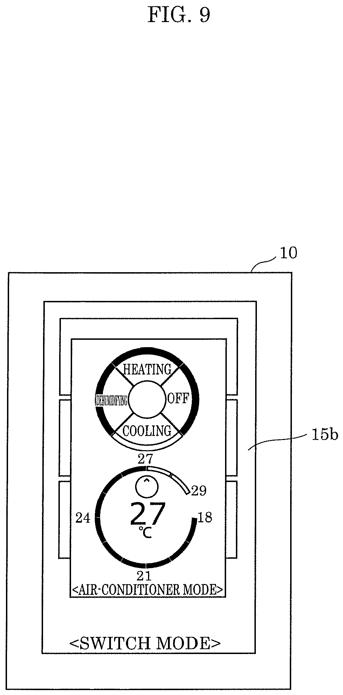

For example, when the image of the switch mode shown in the above-described FIG. 3 is displayed at the specified execution timing, instead of this image, display controller 12b displays the image for controlling air-conditioner 30 shown in the above-described FIG. 4 on display 15b. As shown in FIG. 9, display controller 12b displays a reduction image for controlling air-conditioner 30 on display 15b, by superimposing the reduction image on the image of the switch mode currently displayed on display 15b. FIG. 9 is a diagram showing an example of the superimposed display of images. Accordingly, the user can operate air-conditioner 30 in the automatic operation mode without performing a screen transition operation for changing the image of the switch mode to the image for controlling air-conditioner 30.

Additionally, at this time, after the operation of air-conditioner 30 in the automatic operation mode is started by operating display 15b on which the image for controlling air-conditioner 30 is displayed by the user, display controller 12b may automatically display the image for controlling lighting apparatus 20, instead of the image for controlling air-conditioner 30. Accordingly, the user can light lighting apparatus 20 in the night-light mode, without performing a screen transition operation for changing the image for controlling air-conditioner 30 to the image for controlling lighting apparatus 20.

Note that such a display order of the images is an example. For example, it is not essential that the image for controlling air-conditioner 30 is displayed ahead of the image for controlling lighting apparatus 20, and the image for controlling lighting apparatus 20 may be displayed ahead of the image for controlling air-conditioner 30.

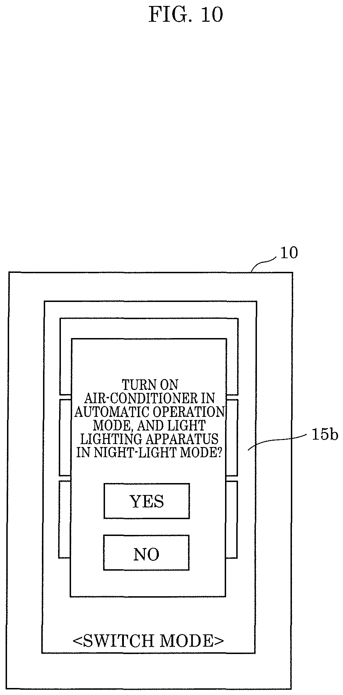

Additionally, in the above-described step S14, an icon that allows the user to perform the recommended control (the control of operating air-conditioner 30 in the automatic operation mode, and lighting of lighting apparatus 20 in the night-light mode) by one-touch may be displayed as the recommendation object. FIG. 10 is a diagram showing an example of the icon for performing the recommended control by one-touch. In the example of FIG. 10, although the icon is displayed by being superimposed on the image of the switch mode, an exclusive image including an icon may be displayed instead of the image of the switch mode.

Accordingly, the recommended control is immediately performed when display 15b displaying the above-described icon is operated by the user.

As described above, display controller 12b displays the recommendation object on display 15b based on the operation history information. Specifically, display controller 12b displays the recommendation object on display 15b at the timing based on the operation history information. In other words, the recommendation object is an object for the user to instruct the control predicted (estimated) to have a high possibility of execution.

Accordingly, it becomes unnecessary for the user to perform a screen transition operation (a swipe operation, etc.) for displaying the image for performing the control intended by the user. In other words, control device 10 can reduce the number of times of operation by the user. With the reduction of the number of times of operation, the amount of information processing, such as screen transition processing, performed by control device 10 is reduced.

Note that the control target of the recommended control is a device other than control device 10, which is controllable before the operation history information is obtained in step S11. That is, the control target of the recommended control is not a device that is newly introduced into device control system 100 after step S11. Additionally, the recommended control is not limited to the control that can be performed before the operation history information is obtained in step S11. The recommended control may include the control whose algorithm is newly generated after the operation history information is obtained in step S11.

### [Display Example 2 of recommendation object]

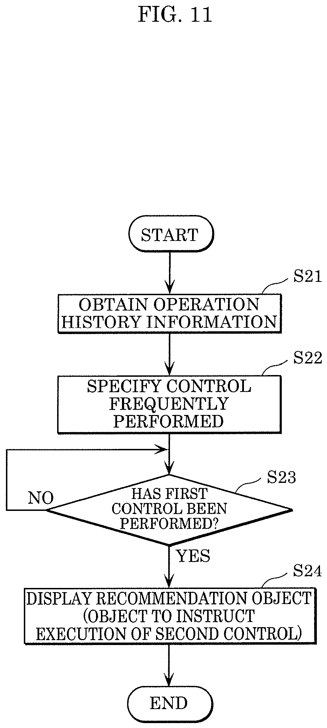

Next, Display Example 2 of the recommendation object performed by control device 10 will be described. FIG. 11 is a flowchart of Display Example 2 of a recommendation object.

First, display controller 12b obtains an operation by the user to display 15b (touch panel 15a) as the operation history information (S21). The operation history information is an example of the first information obtained by control device 10, and is stored in storage 13. Note that Display Example 2 may not include the information about timing in the operation history information.

Next, display controller 12b specifies the control frequently performed based on the operation history information (S22). For example, display controller 12b specifies, in five minutes, that second control of operating air-conditioner 30 in the automatic operation mode was performed after first control of lighting of lighting apparatus 20, based on the operation history information. Thereafter, the number of times the first control and the second control are performed in this order in five minutes is sequentially counted based on the operation history information. When the count number exceeds a certain number (for example, five), display controller 12b sets the second control to the recommended control.

Next, display controller 12b determines whether or not the first control has been performed (S23). This determination is continued until the first control is performed (No in S23).

The first control is performed by, for example, operating display 15b displaying the image for controlling lighting apparatus 20 by the user. When display controller 12b determines that the first control has been performed by an operation by the user (Yes in S23), display controller 12b displays an object (an image or an icon) for the user to instruct the execution of the second control on display 15b as the recommendation object (S24). In this manner, display controller 12b sets the second control to the recommended control.

Here, since the second control is the control in which air-conditioner 30 is operated in the automatic operation mode, the image for controlling air-conditioner 30 shown in, for example, the above-described FIG. 4 is used as the recommendation object.

Although display controller 12b displays, for example, the image for controlling air-conditioner 30 on display 15b instead of the image for controlling lighting apparatus 20, display controller 12b may display a reduction image (icon) for controlling air-conditioner 30 on display 15b, by superimposing the reduction image on the image for controlling lighting apparatus 20 currently displayed on display 15b.

Additionally, in the above-described step S24, as shown in the above-described FIG. 10, the icon that allows the user to perform the second control by one-touch may be displayed as the recommendation object. The icon may be displayed by being superimposed on the image for controlling lighting apparatus 20, or an exclusive image including an icon may be displayed instead of the image for controlling lighting apparatus 20. Accordingly, the recommended control (the second control) is performed when display 15b displaying the above-described icon is operated by the user.

Further, in the example of FIG. 10, although the message "Turn on ...?" is displayed, the message clearly indicating that the second control is the recommended control may be displayed, such as "Why don't you ...?", "What do you think of our recommendation of ...?", and "We recommend you to .... Would you like us to execute it?"

As described above, after the first control that is different from the recommended control (second control) is performed based on an operation to display 15b by the user, display controller 12b displays a recommendation object on display 15b based on the operation history information. The control target of the first control different from the recommended control is lighting apparatus 20, which is different from both control device 10 and air-conditioner 30. A recommendation object is, in other words, an object for the user to instruct the control predicted (estimated) to have a high possibility of execution.

Accordingly, it becomes unnecessary for the user to perform a screen transition operation (a swipe operation, etc.) for displaying the image for performing the control intended by the user. In other words, control device 10 can reduce the number of times of operation by the user. With the reduction of the number of times of operation, the amount of information processing, such as screen transition processing, performed by control device 10 is reduced.

### (Embodiment 2)

### [Display Example 1 of Embodiment 2]

In Embodiment 1, the example has been described in which the recommendation object is displayed based on the operation history information obtained by control device 10. In Embodiment 2, an example will be described in which the recommendation object is displayed based on information different from the operation history information.

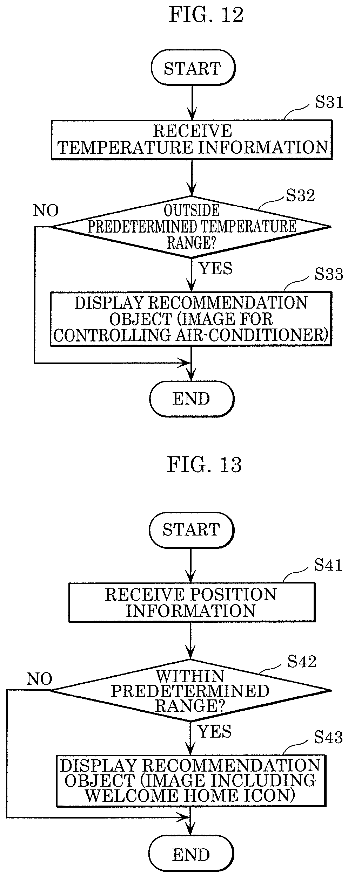

Note that, in following Embodiment 2, description of the previously discussed matter will be omitted as appropriate, and description will focus on the difference from Embodiment 1. FIG. 12 is a flowchart of Display Example 1 of the recommendation object of Embodiment 2.

Display example 1 is an example in which a recommendation object is displayed based on the temperature information obtained by temperature and humidity measurer 31 included in air-conditioner 30. The temperature information obtained by temperature and humidity measurer 31 is an example of the second information obtained by a device other than control device 10.

First, communicator 11 receives the temperature information obtained by temperature and humidity measurer 31 included in air-conditioner 30 (S31). The temperature information may be obtained from a temperature measuring apparatus other than temperature and humidity measurer 31 included in air-conditioner 30. The temperature information may be obtained from, for example, a dedicated apparatus that measures the room temperature.

Next, display controller 12b determines whether or not the temperature indicated by the temperature information received by communicator 11 is outside a predetermined temperature range (S32). Specifically, display controller 12b determines whether or not the temperature indicated by the temperature information received by communicator 11 is equal to or more than a predetermined temperature (for example, 28°C or more). Further, display controller 12b may determine whether or not the temperature indicated by the temperature information received by communicator 11 is less than the predetermined temperature (for example, less than 15°C).

When the temperature indicated by the temperature information received by communicator 11 is outside a predetermined temperature range (28°C or more or less than 15°C) (Yes in S32), display controller 12b displays the image for controlling air-conditioner 30 on display 15b as the recommendation object (S33). The image for controlling air-conditioner 30 may be superimposed on the image currently displayed, or may be displayed instead of the image currently displayed.

On the other hand, when the temperature indicated by the temperature information received by communicator 11 is within the predetermined temperature range (No in S32), the operation is terminated.

In this manner, display controller 12b displays the recommendation object on display 15b at the timing based on the obtained temperature information. For example, in a case where it is estimated that it is necessary to control air-conditioner 30, when the image for controlling air-conditioner 30 is displayed, control device 10 can reduce the number of times of operation performed to display the image for controlling air-conditioner 30 by the user. With the reduction of the number of times of operation, the amount of information processing performed by control device 10 is reduced.

Note that, although a detailed description is omitted, the humidity information may be used instead of the temperature information. That is, display controller 12b may display the recommendation object on display 15b based on the humidity information received by communicator 11. Each of the temperature information and the humidity information is an example of the information indicating the environment condition around control device 10, and is an example of the second information.

Additionally, when server apparatus 80 is a server apparatus that obtains and manages the weather forecast information, instead of the temperature information, temperature prediction information included in the weather forecast information may be used as the above-described second information. The weather forecast information or the temperature prediction information is an example of prediction information of the environment condition around control device 10, and is an example of the second information obtained by a device other than control device 10.

In this case, communicator 11 receives the temperature prediction information from server apparatus 80, and display controller 12b displays the recommendation object on display 15b based on the temperature prediction information received by communicator 11.

Additionally, display controller 12b is a thermometer (not shown) that measures the body temperature of the user, and may display the recommendation object on display 15b based on the temperature information (body temperature information) obtained by the thermometer that is capable of wireless communication with communicator 11. The temperature information obtained by the thermometer is an example of the second information.

For example, when the obtained temperature information indicates the temperature of 38°C or more, display controller 12b displays an image for the scene control including a good night icon on display 15b as the recommendation object. In this manner, in a case where it is estimated that the user's condition is bad, when a change is made into the image for the scene control used mainly at the time when the user goes to sleep, control device 10 can reduce the number of times of operation performed by the user to display the image. With the reduction of the number of times of operation, the amount of information processing performed by control device 10 is reduced.

### [Display Example 2 of Embodiment 2]

Next, as Display Example 2 of Embodiment 2, a description will be given of an example in which the recommendation object is displayed based on the position information obtained by position information obtainer 91 of mobile terminal 90. FIG. 13 is a flowchart of Display Example 2 of the recommendation object of Embodiment 2. The position information is an example of the second information obtained by a device other than control device 10.

First, communicator 11 receives the position information obtained by position information obtainer 91 of mobile terminal 90 from mobile terminal 90 (S41). Next, display controller 12b determines whether or not the position indicated by the position information received by communicator 11 is within a predetermined range centering on the position indicated by the position information of facility 101 (for example, within 20 m) (S42). The position information of facility 101 is stored in storage 13 in advance, for example.

When the position indicated by the position information received by communicator 11 is within the above-described predetermined range of facility 101 (Yes in S42), display controller 12b displays the image for the scene control including the welcome home icon as shown in the above-described FIG. 5 as the recommendation object on display 15b (S43).

On the other hand, when the position indicated by the position information received by communicator 11 is outside the above-described predetermined range, the operation is terminated (No in S42).

In this manner, display controller 12b displays the recommendation object on display 15b at the timing based on the obtained position information. For example, in a case where it is estimated that the user will come home soon, when the image for the scene control used when the user comes home is displayed as the recommendation object, control device 10 can reduce the number of times of operation performed by the user to display the image. With the reduction of the number of times of operation, the amount of information processing performed by control device 10 is reduced.

### [Display Example 3 of Embodiment 2]

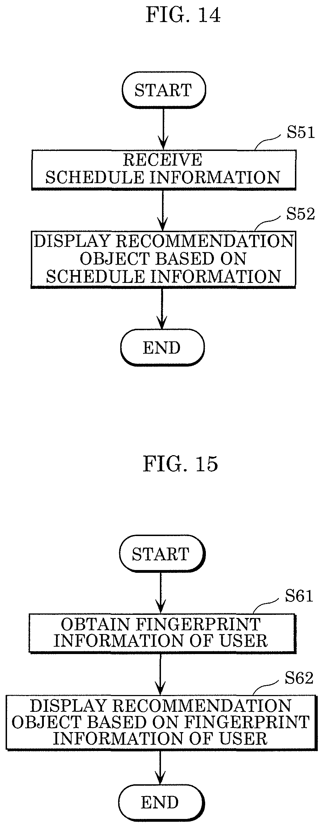

Next, as Display Example 3 of Embodiment 2, a description will be given of an example in which the recommendation object is displayed based on the schedule information obtained and managed by server apparatus 80. FIG. 14 is a flowchart of Display Example 3 of the recommendation object of Embodiment 2. Note that, differing from Display Example 2, in Display Example 3, a description will be given by assuming that server apparatus 80 is a server apparatus that obtains and manages the schedule information. The schedule information is an example of the second information.

In Display Example 3, the user registers in advance the schedule information of the user to server apparatus 80 via an SNS (Social Networking Service) or an email by operating mobile terminal 90. That is, the schedule information is obtained in advance by server apparatus 80.

Communicator 11 receives the schedule information of the user registered in advance in this manner from server apparatus 80 (S51). Note that the schedule information may be received from mobile terminal 90, or may be directly input to control device 10 via touch panel 15a.

Next, display controller 12b displays the recommendation object on display 15b based on the schedule information received by communicator 11 (S52).

For example, when the coming home schedule time is set in the schedule information received by communicator 11, display controller 12b determines whether or not the current time has reached the coming home schedule time by using timer 15d. When the current time reaches the coming home schedule time, display controller 12b displays the image including the welcome home icon as shown in the above-described FIG. 5 as the recommendation object on display 15b.

Additionally, when the holding schedule time of a party is set in the received schedule information for example, display controller 12b determines whether or not the current time has reached the holding schedule time by using timer 15d. When the current time has reached the holding schedule time, display controller 12b displays an image including an icon for performing the scene control for party as the recommendation object on display 15b. Further, in this case, control device 10 may prompt the user to perform an operation to the icon, by outputting a sound from a speaker (not shown).

In this manner, display controller 12b displays the recommendation object on display 15b at the timing based on the obtained schedule information. When the recommendation object is displayed based on the schedule information, control device 10 can reduce the number of times of operation performed by the user to display a target image. With the reduction of the number of times of operation, the amount of information processing performed by control device 10 is reduced.

Also, in addition to the schedule information, the weather forecast information described in Display Example 2 may be used. In this case, communicator 11 receives the weather forecast information from, for example, another server apparatus that manages the weather forecast information, which is different from server apparatus 80 that manages the schedule information.

For example, when a going out schedule time is set in the received schedule information, display controller 12b usually determines whether or not the current time has reached the going out schedule time by using timer 15d, and when the current time has reached the going out schedule time, display controller 12b displays an image including a going out icon as shown in the above-described FIG. 6 on display 15b as the recommendation object.

Here, in the received weather forecast information, when the rainfall probability at the going out schedule time is equal to or more than a predetermined probability (for example, 60% or more), there is a possibility that the going out schedule time may be advanced. Therefore, in such a case, display controller 12b determines whether or not the current time has reached a first time, which is before the going out schedule time, by using timer 15d, and when the current time has reached the first time, display controller 12b displays the image including the going out icon on display 15b as the recommendation object. The first time is a time that is ten minutes earlier than the going out schedule time, for example.

In this way, display controller 12b may advance the timing at which the recommendation object is displayed, based on the weather forecast information. Further, display controller 12b may delay the timing at which the recommendation object is displayed, based on the weather forecast information.

Accordingly, the display of the recommendation object can be performed at a more appropriate timing.

Further, in addition to the schedule information, the traffic jam information or the delay information of public transportation facilities may be used. In this case, communicator 11 receives the traffic jam information or the delay information of public transportation facilities from, for example, another server apparatus that manages and obtains the traffic jam information or the delay information of public transportation facilities, which is different from server apparatus 80 that manages the schedule information. The traffic jam information and the delay information of public transportation facilities are examples of the second information.

For example, when the going out schedule time is set in the received schedule information, display controller 12b usually determines whether or not the current time has reached the going out schedule time by using timer 15d, and when the current time has reached the going out schedule time, display controller 12b displays the image including the going out icon as shown in the above-described FIG. 6 on display 15b as the recommendation object.

When it is estimated by the received traffic jam information or the delay information of public transportation facilities that the user leaves early, display controller 12b determines whether or not the current time has reached the first time, which is before the going home schedule time, by using timer 15d, and when the current time has reached the first time, display controller 12b displays the image including the going out icon on display 15b as the recommendation object. The first time may be properly set according to, for example, the degree of traffic jam indicated by the traffic jam information, or the degree of delay indicated by the delay information of public transportation facilities.

In this manner, display controller 12b may advance the timing at which the recommendation object is displayed, based on the traffic jam information or the delay information of public transportation facilities.

### [Display Example 4 of Embodiment 2]

Next, as Display Example 4 of Embodiment 2, a description will be given of an example in which the recommendation object is displayed based on the fingerprint information of the user obtained by identification information obtainer 15c. FIG. 15 is a flowchart of Display Example 4 of the recommendation object of Embodiment 2. Note that the fingerprint information is an example of the identification information, and is an example of the first information.

In Display Example 4, a plurality of users set in advance the recommendation object (an image or an icon) to be displayed when the users operate control device 10 by performing an operation to display 15b (touch panel 15a), and register in advance the fingerprint information of the users via identification information obtainer 15c. That is, the association information with which the fingerprint information is associated with the recommendation object for each of the users is stored in advance in storage 13.

Identification information obtainer 15c obtains the fingerprint information of the user (S61). Next, display controller 12b displays the recommendation object on display 15b based on the obtained fingerprint information of the user (S62). Specifically, display controller 12b specifies the recommendation object associated with the user who has the obtained fingerprint information by referring to the association information stored in storage 13. Then, display controller 12b displays the specified recommendation object on display 15b.

In this manner, when the recommendation object is displayed based on the fingerprint information of the user, control device 10 can reduce the number of times of operation performed by the user to display the recommendation object. With the reduction of the number of times of operation, the amount of information processing performed by control device 10 is reduced.

Note that the fingerprint information is an example of the identification information. As described above, biometric information other than the fingerprint information or an image of the user's face may be used as the identification information.

### (Conclusion)

As described above, the display method includes: based on at least one of first information obtained by control device 10 including display 15b and second information obtained by a device other than control device 10, displaying, on display 15b, a recommendation object for a user to instruct a recommended control having, as a control target, a first device that is other than control device 10 and controllable before the first information and the second information are obtained. Control device 10 is an example of an information terminal. A control target device is, for example, lighting apparatus 20, air-conditioner 30, or electric curtain 40, but is not limited to these.

In this manner, the number of times of operation for a user to control the device is reduced, by displaying the recommendation object for the user to instruct the recommended control.

Furthermore, for example, in the displaying, the recommendation object is displayed on display 15b after a first control different from the recommended second control is performed based on an operation to display 15b by the user.

Accordingly, the recommendation object (an image or an icon) for performing control of a first device is displayed without an instruction (operation) by the user from a state where the image for the second control is displayed. That is, the number of times of operation by the user to control the device is reduced.

Furthermore, for example, the first control different from the recommended control has a second device different from both the control device and the first device as the control target.

Accordingly, the recommendation object (an image or an icon) for instructing the execution of control of the first device is displayed without an instruction (operation) by the user from a state where the image for controlling the second device is displayed. That is, the number of times of operation by the user to control the device is reduced.

Furthermore, for example, the recommended control may be performed when display 15b on which the recommendation object is displayed is operated by the user.

Accordingly, the user can immediately perform the recommended control by operating display 15b on which the recommendation object is displayed.

Furthermore, for example, in the displaying, the recommendation object is displayed on display 15b at a timing based on at least one of the first information and the second information.

Accordingly, when the recommendation object is displayed at an appropriate timing, the number of times of operation by the user to control the device is reduced.

Furthermore, for example, in the displaying, the recommendation object is displayed on display 15b instead of another object currently displayed on display 15b.

Accordingly, since the operation for changing the other object currently displayed to the recommendation object is omitted, the number of times of operation by the user to control the device is reduced.

Furthermore, for example, in the displaying, the recommendation object is displayed on display 15b by superimposing the recommendation object on the other object currently displayed on display 15b.

Accordingly, since the operation for displaying the recommendation object is omitted, the number of times of operation by the user to control the device is reduced.

Furthermore, for example, the first information is operation history information of the user to display 15b, and, in the displaying, the recommendation object is displayed on display 15b based on the operation history information.

Accordingly, when the recommendation object for the control having a high possibility of being used based on the operation history is displayed, the number of times of operation by the user to control the device is reduced.

Furthermore, for example, the operation history information includes information about timing of the operation, including at least one of time, date, a day of the week, and a season.

Accordingly, when the recommendation object for the control having a high possibility of being used based on the information about timing is displayed, the number of times of operation by the user to control the device is reduced.

Furthermore, for example, the first information includes identification information of the user, and, in the displaying, the recommendation object is displayed on display 15b based on the identification information of the user. The identification information of the user is, for example, fingerprint information of the user.

Accordingly, the above-described display method can display the recommendation object for each user.

Furthermore, for example, the second information includes at least one of information indicating an environment condition around control device 10, and prediction information of the environment condition around control device 10, and, in the displaying, the recommendation object is displayed on display 15b based on at least one of the information indicating the environment condition around control device 10 and the prediction information of the environment condition around control device 10. The information indicating an environment condition around control device 10 is, for example, temperature information or humidity information. The prediction information of the environment condition around control device 10 is, for example, weather forecast information.

Accordingly, the above-described display method can display the recommendation object for the user to instruct the control considered to have a high possibility of being used, based on the information indicating the environment condition around control device 10, or the prediction information of the environment condition around control device 10.

Furthermore, for example, the second information includes position information of the device other than control device 10, and, in the displaying, the recommendation object is displayed on display 15b based on the position information of the device other than control device 10. The device other than control device 10 is, for example, mobile terminal 90.

Accordingly, the above-described display method can display the recommendation object for the user to instruct the control considered to have a high possibility of being used, based on the position information.

Furthermore, for example, the second information includes schedule information of the user, and, in the displaying, the recommendation object is displayed on display 15b based on the schedule information of the user.

Accordingly, the above-described display method can display the recommendation object for the user to instruct the control considered to have a high possibility of being used, based on the schedule information.

Furthermore, for example, the first device is disposed in facility 101, control device 10: is disposed in wall 103 included in facility 101; and further includes a power receiver that receives electric power supplied for a power switch of a device disposed in facility 101. Wall 103 is an example of a structure.

Accordingly, the above-described display method can display the recommendation object on display 15b of control device 10 operated by using the electric power supplied for the power switch.

Furthermore, for example, control device 10 further includes a switch element that switches between supplying and not supplying power to the device disposed in facility 101.

Accordingly, the above-described display method can display the recommendation object on display 15b of control device 10 that functions as a power switch.

Furthermore, the present invention may be realized as a program for causing a computer to execute any of the above described display methods.

In this manner, the number of times of operation by the user to control the device is reduced by displaying the recommendation object for the user to instruct the recommended control.

Furthermore, device control system 100 includes: control device 10 including display 15b; and display controller 12b that, based on at least one of first information obtained by control device 10 and second information obtained by a device other than control device 10, displays, on display 15b, a recommendation object for a user to instruct a recommended control having, as a control target, a first device that is other than control device 10 and controllable before the first information and the second information are obtained. Device control system 10 is an example of a display system.

In this manner, the number of times of operation by the user to control the device is reduced by displaying the recommendation object for the user to instruct the recommended control.

It should be noted that device control system 100 may be implemented as a single device or may be implemented as a plurality of devices. When device control system 100 is implemented as a plurality of devices, the elements included in device control system 100 described in the foregoing embodiments may be allocated as the plurality of devices in any manner.

For example, device control system 100 may be realized as a client/server system. For example, server apparatus 80 may include the function of display controller 12b, and control device 10 may function as an apparatus (a display apparatus and a user interface apparatus) that is passively operated based on the signal transmitted from server apparatus 80. In this case, display 15b included in control device 10 displays the recommendation object based on the signal transmitted from server apparatus 80. Display 15b displays on display 15b the recommendation object for the user to instruct the recommended control, which has the first device other than control device 10 controllable before the first information and the second information are obtained as the control target.

### (Other embodiments)

In the above, although the embodiments have been described, the present invention is not limited to the above-described embodiments.

The communication method between the apparatuses described in the above-described embodiments is an example. The communication method between the apparatuses is not particularly limited. Wireless communication using telecommunications standards, such as specific low power radio, ZigBee (registered trademark), Bluetooth (registered trademark), or Wi-Fi (registered trademark), is performed between apparatuses. Further, specifically, wireless communication is electric wave communication, or infrared ray communication.

Additionally, instead of wireless communication, wired communication, such as powerline communication (PLC) or communication using a cable LAN, may be performed between apparatuses.

Furthermore, for example, in the foregoing embodiments, a process executed by a particular processing unit may be executed by another processing unit. Furthermore, the order of processes may be changed, or processes may be executed in parallel.

Furthermore, in the foregoing embodiments, each of the elements may be configured using dedicated hardware, or may be implemented by executing a software program suitable for the element. Each of the elements may be implemented by means of a program executer, such as a CPU or a processor, reading and executing the software program recorded on a recording medium such as a hard disk or a semiconductor memory.

Furthermore, each of the elements may be a circuit (or an integrated circuit). These circuits as a whole may compose a single circuit or may be individual circuits. Moreover, each of the structural components may be implemented by a general-purpose processor or a dedicated processor.

Furthermore, the general or specific aspects of the present invention may be implemented as a system, an apparatus, a method, an integrated circuit, a computer program, or a computer-readable recording medium such as a CD-ROM, or may be implemented as any combination of a system, an apparatus, a method, an integrated circuit, a computer program, and a recording medium. For example, the present invention may be implemented as the control device (information terminal) according to the foregoing embodiments.

Furthermore, in the foregoing embodiments, the order of processes in the operation of the device control system described in the foregoing embodiments is an example. The order of the processes may be changed, or processes may be executed in parallel.

Forms obtained by making various modifications to the above embodiments that can be conceived by those skilled in the art, as well as forms obtained by combining elements and functions in respective embodiments, without materially departing from the spirit of the present invention are included in the present invention.

### REFERENCE MARKS IN THE DRAWINGS

- 10: control device (information terminal)
- 12b: display controller
- 15b: display
- 100: device control system (display system)

## Claims

1. A display method, comprising:
based on at least one of first information obtained by an information terminal including a display and second information obtained by a device other than the information terminal, displaying, on the display, an object for a user to instruct a recommended control having, as a control target, a first device that is other than the information terminal and controllable before the first information and the second information are obtained.

2. The display method according to claim 1, wherein
in the displaying, the object is displayed on the display after control different from the recommended control is performed based on an operation to the display by the user.

3. The display method according to claim 2, wherein
the control different from the recommended control has a second device different from both the information terminal and the first device as the control target.

4. The display method according to any one of claims 1 to 3, wherein
the recommended control is performed when the display on which the object is displayed is operated by the user.

5. The display method according to any one of claims 1 to 4, wherein
in the displaying, the object is displayed on the display at a timing based on at least one of the first information and the second information.

6. The display method according to any one of claims 1 to 5, wherein
in the displaying, the object is displayed on the display instead of an other object currently displayed on the display.

7. The display method according to any one of claims 1 to 5, wherein
in the displaying, the object is displayed on the display by superimposing the object on the other object currently displayed on the display.

8. The display method according to any one of claims 1 to 7, wherein
the first information is operation history information of the user to the display, and
in the displaying, the object is displayed on the display based on the operation history information.

9. The display method according to claim 8, wherein
the operation history information includes information about timing of the operation, including at least one of time, date, a day of the week, and a season.

10. The display method according to any one of claims 1 to 7, wherein
the first information includes identification information of the user, and
in the displaying, the object is displayed on the display based on the identification information of the user.

11. The display method according to any one of claims 1 to 7, wherein
the second information includes at least one of information indicating an environment condition around the information terminal, and prediction information of the environment condition around the information terminal, and
in the displaying, the object is displayed on the display based on at least one of the information indicating the environment condition around the information terminal and the prediction information of the environment condition around the information terminal.

12. The display method according to any one of claims 1 to 7, wherein
the second information includes position information of the device other than the information terminal, and
in the displaying, the object is displayed on the display based on the position information of the device other than the information terminal.

13. The display method according to any one of claims 1 to 7, wherein
the second information includes schedule information of the user, and
in the displaying, the object is displayed on the display based on the schedule information of the user.

14. The display method according to any one of claims 1 to 13, wherein
the first device is disposed in a facility,
the information terminal:
is disposed in a structure included in the facility; and
further includes a power receiver that receives electric power supplied for a power switch of a device disposed in the facility.

15. The display method according to claim 14, wherein
the information terminal further includes a switch element that switches between supplying and not supplying power to the device disposed in the facility.

16. A program for causing a computer to execute the display method according to any one of claims 1 to 15.

17. A display system, comprising:
an information terminal including a display; and
a display controller that, based on at least one of first information obtained by the information terminal and second information obtained by a device other than the information terminal, displays, on the display, an object for a user to instruct a recommended control having, as a control target, a first device that is other than the information terminal and controllable before the first information and the second information are obtained.
